Europäisches Patentamt

European Patent Office

Office européen des brevets

(11) Publication number: **0 368 650**
**A1**

(12) # EUROPEAN PATENT APPLICATION

(21) Application number: **89311585.7**

(22) Date of filing: **09.11.89**

(51) Int. Cl.⁵: **F02G 3/00, F25B 9/00,**
**F23C 11/04, B01D 53/04**

(30) Priority: **10.11.88 GB 8826377**

(43) Date of publication of application:
**16.05.90 Bulletin 90/20**

(84) Designated Contracting States:
**AT BE CH DE ES FR GB GR IT LI LU NL SE**

(71) Applicant: **THE HASER COMPANY LIMITED**
**Moray House 16 Bank Street**
**Inverness, 1V1 1QY Scotland(GB)**

(72) Inventor: **Wells, Alan Arthur**
**Grove House Mepal**
**Ely Cambridgeshire, CB6 2AR(GB)**

(74) Representative: **Rackham, Stephen Neil et al**
**GILL JENNINGS & EVERY 53-64 Chancery**
**Lane**
**London WC2A 1HN(GB)**

(54) **Gas resonance device.**

(57) A gas resonance device (101) comprises a pulsed combustor (102) located in the middle of a substantially spherical resonance chamber (103). Preferably the resonance chamber is formed as an icosahedron (103) with triangular segments (104) having rounded edges. The gas resonance device may be used in combination with a pressure swing gas separator (16, 108), the oscillating gas in the gas resonance device (1, 101) being used to provide the pressure changes required to drive the pressure swing gas separator (16, 108). Alternatively it may be used in combination with a heat pump (19, 120), in which case, the oscillating gas in the thermally driven gas resonance device (1, 101) is used to provide the power to operate the heat pump (19, 120). A flexible diaphragm (109, 133) may bound part of the resonance chamber (3, 103) and have an electrical transducer (121, 122) coupled to it which generates electrical power upon the diaphragm (109, 133) oscillating as a result of the gas resonance inside the resonance chamber (3, 103).

Fig.1.

## Gas Resonance Device

EP-A-0267727 describes and claims a gas resonance device comprising a resonance tube which expands in cross section along its length from one end to the other, a heat source located at the one end of the resonance tube, and means to trigger oscillations in a gas in the resonance tube. The resonance tube is preferably of ogival form and the heat source and means to trigger oscillations in a gas in the resonance tube are preferably formed by a pulsed combustor having a pulse repetition frequency corresponding to a resonant frequency of the gas resonance tube. The pressure waves generated by such a thermally driven gas resonance device are described and claimed to operate a pressure swing gas separator or a heat pump.

Our earlier specification explains that one of the main limiting factors on the efficiency of this type of gas resonance device is the wall friction that occurs between the oscillating gas in the resonance tube and the side wall of the resonance tube. By making the side wall of the resonance tube of ogival form it is possible to reduce these wall friction losses and so improve the overall efficiency of the gas resonance device.

According to a first aspect of this invention a gas resonance device comprises a pulsed combustor located in the middle of a substantially spherical resonance chamber.

A thermally driven gas resonance device in accordance with this invention has the advantage that the wall friction losses discussed in our earlier application are eliminated altogether. The pulsed combustor produces a substantially spherical expanding wave front which encounters no wall friction whatsoever as it moves from the middle of the resonance chamber to the outside of the resonance chamber. This completely avoids the wall friction losses discussed in detail in the earlier European patent specification.

Preferably the gas resonance device includes means to provide an explosive gas mixture to the pulsed combustor. Preferably the pulsed combustor has a pulse repetition frequency corresponding to the resonant frequency of the substantially spherical resonance chamber which, largely, is dependent upon its radius. The means to supply the explosive mixture to the pulsed combustor may itself include a tuned valve or a resonance tube so that the pulsed combustor receives a pulsed supply of explosive mixture. In this case the explosive mixture is preferably supplied at the resonance frequency of the substantially spherical resonance chamber.

A second aspect of this invention comprises a thermally driven gas resonance device in combination with a pressure swing gas separator, the oscillating gas in the gas resonance device being used to provide the pressure changes required to drive the pressure swing gas separator.

According to a third aspect of this invention a thermally driven gas resonance device is combined with a heat pump with the oscillating gas in the thermally driven gas resonance device being used to provide the power to operate the heat pump.

The second and third aspects of this invention do not include the combinations disclosed and claimed in EP-A-0267727.

In the case of the second and third aspects of this invention preferably the thermally driven gas resonance device is formed in accordance with the first aspect of this invention.

Preferably the pressure swing gas separator comprises a bed of adsorbent material located at the periphery of the substantially spherical resonance chamber. Typically the adsorbent material is an expanded zeolite but active carbon may also be used. Preferably the resonance chamber is formed as an icosahedron with triangular segments having rounded edges. In this case each bed of adsorbent material preferably has a generally circular configuration with the beds being located in the side wall of the resonance chamber with three circular beds contained wholly within each substantially triangular segment of the icosahedron and other beds centred on the points of the icosahedron.

When the gas resonance device includes a heat pump preferably it includes a regenerator located adjacent, but spaced from, the periphery of the substantially spherical resonance chamber. Preferably the regenerator is formed as an equatorial belt extending continuously within the spherical resonance chamber. The regenerator preferably includes a heat sink located on its side adjacent the outer periphery of the substantially spherical resonance chamber and remote from the pulsed combustor. Preferably a source of low grade heat is introduced into the resonance chamber on the side of the regenerator towards the pulsed combustor. This source of low grade heat may be formed by a number of water jets arranged to provide a water spray into the inside of the resonance chamber. The water jets may also be included in the pressure swing gas separator to assist in the removal of the heat that is not converted into mechanical energy in the resonance chamber. In this case a small proportion of the water that is sprayed in is flash evaporated and this flash evaporation supplements the mechanical power generated in the resonance chamber. The droplets that are not flash evaporated cool the gas in the resonance chamber during the subsequent expansion cycle and the heated water aggregating from these water droplets is drained from the base of the substantially cylindrical chamber and may be used as a heat source, or merely cooled, and recirculated.

According to a fourth aspect of this invention a pressure swing gas separator comprises a thermally driven gas resonance device including a pulsed combustor and a resonance chamber, a diaphragm bounding part of the resonance chamber and a bed of adsorbent material adjacent the diaphragm and on the side of the diaphragm remote from the pulsed combustor.

The use of a diaphragm separating the inside of the resonance chamber from the bed of adsorbent material may be used with resonance chambers that are generally conical as described in EP-A-0267727 or with resonance chambers that are substantially spherical. The mechanical oscillations of the gas cause corresponding oscillation of the diaphragm but the diaphragm provides a physical barrier which separates the bed of adsorbent material from the inside of the resonance chamber and so prevents combustion products from the pulsed combustor contaminating the bed of adsorbent material. Preferably the diameter, thickness and stiffness of the diaphragm are selected so that the diaphragm has a natural resonant frequency corresponding to that of the resonance chamber.

Preferably the bed of adsorbent material is housed within a closed chamber having a valve means to control the flow of mixed gas into and exhaust of depleted gas from the side of the bed adjacent the diaphragm, and an outlet for the separated gas which passes through the bed of adsorbent material and emerges from it on the side of the bed remote from the diaphragm. Preferably the valve means includes an annular seat and the diaphragm forms its closure member. In this way, as the diaphragm moves towards and away from the bed of adsorbent material it opens and closes the valve means.

The valve means may include an exhaust valve located in the middle of the diaphragm so that the gas mixture moves radially inwards from the annular valve seat towards the middle of the diaphragm. In this case the exhaust valve is arranged to open after the inlet valve but closes at substantially the same time as the inlet valve. One way of achieving this is to have the exhaust valve closure member free to slide within limits on a spindle mounted on the diaphragm so that, in use, as the exhaust valve closure member moves with the diaphragm away from the adsorbent bed it is in a first position on the spindle but as it moves with the diaphragm towards the adsorbent bed it is in a second position on the spindle.

Alternatively the valve formed by the annular valve seat and the diaphragm acts as both an inlet and an exhaust valve. In this case it is preferred that a harmonic vibration is applied to the diaphragm so that, in addition to its fundamental oscillation towards and away from the adsorbent bed there is also a superimposed secondary vibration which appears as a wave moving from one side to the other of the diaphragm. In this way as the diaphragm is moving away from the bed one side of the diaphragm lifts from its annular seat initially. A reduced pressure generated in the bed whilst the diaphragm is moving away from it draws gas mixture into the space between the diaphragm and the bed via the unseated diaphragm valve seat on the one side of the diaphragm. After a delay the other side of the diaphragm also unseats from the annular seat. The gas introduced into the one side of the diaphragm has a sideways momentum which is continued and encouraged by the flexing of the diaphragm and causes a gas flow from the one side to the other side of the diaphragm which causes the depleted gas from the space between the bed and the diaphragm to be exhausted from the other side of the diaphragm. As the diaphragm returns towards the adsorbent bed the one side of the diaphragm seats first against the annular valve seat followed by the other side. As the diaphragm continues to move towards the adsorbent bed it pressurises the bed and then moves away from the bed to depressurise it whereupon the one side of the diaphragm again lifts from its valve seat first and the cycle is repeated. In this way not only is a pressurising and depressurising operation carried out on the adsorbent bed by the fundamental oscillation of the diaphragm but also, as a result of the harmonic oscillation imposed upon the diaphragm a transverse wave motion on the diaphragm is created which drives the gas transversely across the top of the adsorbent bed. This provides particularly effective scavenge operation which scavenges the depleted gas mixture from the top of the bed on each oscillation of the diaphragm.

This additional harmonic motion can be applied to the diaphragm by, for example, applying an eccentric mass to one side of the diaphragm, preferably matched by a corresponding lightening of the diaphragm on the other side. This is particularly useful when the diaphragm is driven by a thermally driven gas resonance device.

According to a fifth aspect of this invention a thermally driven gas resonance device comprises a resonance chamber containing a pulsed combustor, a flexible diaphragm bounding part of the resonance chamber and an electrical transducer which is coupled to the diaphragm and which generates electrical power upon the diaphragm oscillating as a result of the gas resonance inside the resonance chamber.

Such a gas resonance device is particularly useful as the power source in a combined heat and power installation. In such an arrangement the waste heat from the thermally driven gas resonance device provides a source of heat whilst the output from the electrical transducer provides electrical power. A small scale version of this aspect of the present invention may typically have the form of a conical resonance chamber similar to that described in EP-A-0267727 but including a flexible diaphragm at its largest end. Such an arrangement can provide both heat and power for a relatively small unit such as a remote and isolated dwelling. Preferably however the resonance chamber is substantially spherical or icosahedral as described above and in this case some of the elements of the icosahedron have electrical transducers attached to them whilst others are substantially rigid and include a regenerator adjacent but spaced from the periphery of the resonance chamber forming part of a heat pump to enhance the heat generation. Naturally the proportion of the elements of the icosahedron which are devoted to each application varies in relation to the required outputs. Preferably a heat sink is provided at the face of the regenerator nearer the pulsed combustor. This region is cooler than the region at the side of the regenerator remote from the pulsed heat source and thus this heat sink provides a cooling source. Thus a combined heat and power system can also be used to provide electricity and, for example, cooling for an air conditioning system during summer months.

According to a sixth aspect of this invention a thermally driven gas resonance device comprises a resonance chamber including a pulsed combustor and a bed of adsorbent material which preferentially adsorbs oxygen or nitrogen bounding at least part of the resonance chamber so that mechanical oscillations resulting from gas resonance within the chamber provides power for the pressure swing gas separator, the pressure swing gas separator performing a pressure swing gas separation on air to produce a gas phase which is rich in oxygen, a portion of the gas phase rich in oxygen being mixed with an inflammable gas or vapour and being fed to the pulsed combustor, the oxygen enrichment accelerating the combustion and so sharpening the intensity of the combustion pulses and, thereby, enhancing the mechanical resonances induced within the chamber.

When the resonance chamber is substantially spherical and formed as an icosahedron it is preferred that one of the elements on its outer surface is formed as a pressure swing gas separator module which is used to provide the oxygen enriched gas for combustion in the pulsed combustor. This is true whether the gas resonance device is otherwise used as, for example, a combined heat and power device or whether it is used essentially to drive a pressure swing gas separator or to drive a heat pump.

When the resonance chamber is substantially spherical or is formed as an icosahedron having its outer surface formed by a number of diaphragms at least one of these is used as the diaphragm of a diaphragm pump. The diaphragm pump may be used to pump the combustion mixture to the pulsed combustor, to pump the gas mixture into the pressure swing gas separator, pump the separated gas product array from the pressure swing gas separator, pump heated or cooled water to or from the heat pump or for pumping any other fluid. In this case the diaphragm bounds part of a closed chamber having an inlet and an outlet valve. Again it is preferred that the diaphragm is tuned so that its natural resonant frequency corresponds to that of the resonance chamber.

A device in accordance with the present invention is now described in detail with reference to the accompanying drawings, in which:-

Figure 1 is a cross-section through a first example of a gas resonance device;

Figure 2 is a partially cut-away plan of the gas resonance device of Figure 1;

Figure 3 is a section through a first example of gas-separator module;

Figure 4 is a graph showing the displacement with respect to time of the valves of the first example of gas-separator module;

Figure 5 is a section through a second example of gas-separator module;

Figure 6 is a cross-section to an enlarged scale through the diaphragm;

Figure 7 is a series of cross-sections through the diaphragm of the second example of gas-separator module showing how it flexes;

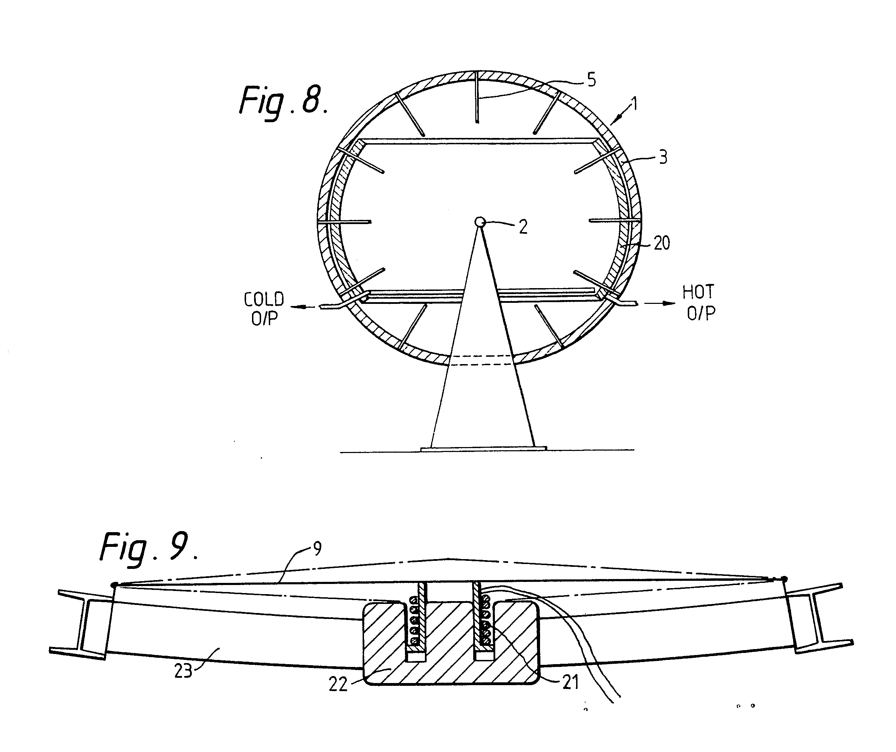

Figure 8 is a sectional view of a second example of a gas resonance device; and,

Figure 9 is a sectional view of a diaphragm and generator suitable for use in the device of Figure 8.

A thermally driven gas resonance device comprises a generally spherical chamber 1 and a pulsed combustor 2 positioned centrally within the chamber. The combustor 2 includes a tuned non-return valve such as that described in our earlier application EP-A-0267727. A combustion mixture of air and an appropriate fuel gas is admitted to the chamber 1 via the tuned non-return valve. The combustion mixture is periodically ignited at a frequency matched to the resonant frequency of the spherical chamber 1. A sparking plug is provided in the combustor to cause the initial ignition but subsequently the pulsed combustion is self-sustaining.

As an alternative to the use of a tuned non-return valve in the combustor the combustion mixture may be supplied to the chamber 1 via a resonant gas-supply tube which extends into the chamber 1 and is tuned to supply the combustion mixture in pulses at the required pulse repetition frequency.

The operation of the combustor in the manner described above provides a pulsed heat source at the centre of the chamber 1 which produces a substantially spherical expanding wave front. Since the frequency of the combustor is matched to the resonant frequency of the chamber the combustor drives resonant modes of the chamber, maximising the efficiency with which the heat energy of combustion is converted into the mechanical energy associated with the pressure swings in the gas within the chamber 1. In the first example described this mechanical energy is primarily used to drive a gas separator used for oxygen enrichment. However the modular construction of the resonance device enables the incorporation of units for other functions such as, for example, the heat pumps and electrical generators described in further detail below, in different regions of the device.

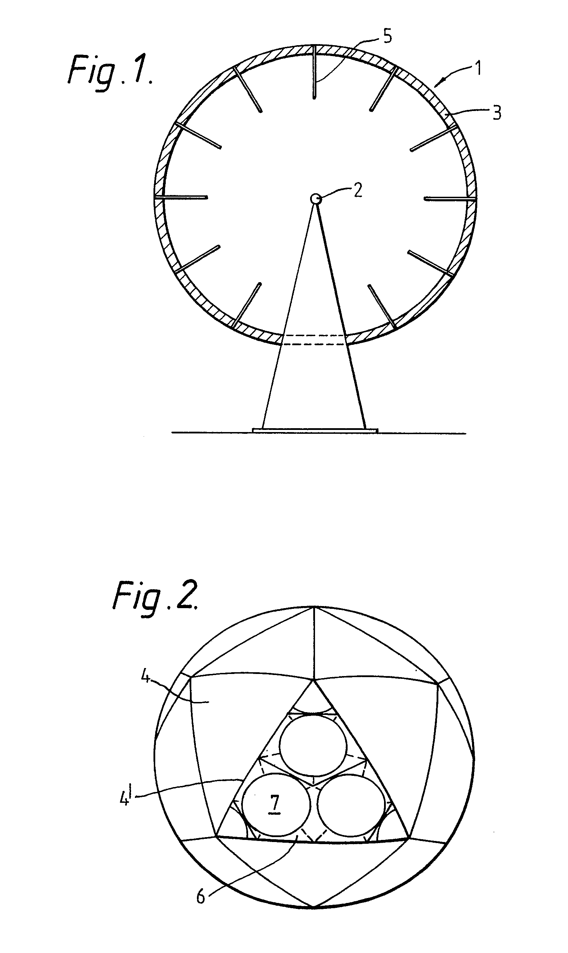

In the first example of the present invention shown in Figures 1 and 2 the generally spherical chamber 1 is defined by a hollow icosohedral shell 3 formed of generally triangular elements 4. Open-ended exhaust tubes 5 extend into the chamber 1 from the outer surface of the shell 3. The radially innermost ends of the tubes 5 lie at points spaced from the centre of the spherical chamber 1 by about three-quarters of the sphere radius. There is a pressure null point in the resonant mode of the chamber at this radius. Combustion products can therefore be vented from the chamber 1 at these points with minimum power loss and external noise. If it is required to take the exhaust further away from the chamber 1 then the tubes 5 may project beyond the surface of the shell 3.

Pipes connected to an external water supply (not shown) are positioned concentrically within the exhaust tubes 5. These pipes provide inwardly directed water sprays. A small proportion of the water is converted to steam by the heat source during thermal pulses and so supplements the production of mechanical power. The remaining mist of water droplets cools the gases in the chamber during the subsequent expansion cycle, prior to recompression, so removing excess heat energy and further increasing the efficiency of the device. Heated water aggregated from water droplets returned to the internal spherical surface of the chamber 1 is drained away at the base and may be cooled and recirculated. When the resonance device includes heat-pump modules the water droplets collected at the periphery of the chamber 1 may be used in the operation of the pump in the manner described in further detail below.

As noted above, the primary purpose of the particular example of the present invention described is to provide a thermally driven pressure swing gas separator. To this end the majority of the modules in the chamber 1 are formed as gas-separator modules such as that shown with its outer surface cut-away in the element 4' of Figure 2. Each gas-separator module comprises a number of circular elements 7, each element 7 comprising a dished zeolite bed 8 and a diaphragm 9 covering the bed 8 on its inwardly facing surface. Each element 7 is 0.8 metres in diameter and up to 72 such elements may be provided across the inner surface of a chamber I or 2 metres radius. In use, the pressure-swings at the periphery of the chamber 1 drive the diaphragm 8 back and forth in the radial direction, that is the direction transverse to the surface of the bed 8. Air is drawn in through an annular inlet 10 surrounding the periphery of the bed 8 and driven through the bed 8 in the manner described in further detail below. Oxygen-enriched gas leaving the bed 8 at its lower surface is collected under a skirt 11 and transferred via ducts 12 to the tubular framework 13 of the icosohedral shell 3. The tubular framework 13 is connected in common to all the gas separator modules 6 and provides a path from the modules 6 to an outlet (not shown) from which the the oxygen-enriched gas is piped away from the chamber 1.

As well as serving to isolate the zeolite bed 8 from the combustion gases within the chamber 1 the diaphragm 9 also serves to provide a valving arrangement which ensures that air is admitted and depleted air exhausted at appropriate points in the oscillatory cycle. The diaphragm 9 is dimensioned to have the same resonant frequency as the chamber 1. In the present example the diaphragm 9 is formed of steel with a diameter of 0.8 metres and a thickness of 6 mm. The diaphragm 9 is suspended at its edges outside the bed 8 so that in its equilibrium position it clears the periphery of the bed 8 but touches a valve seat 14 formed some 10 cm in from the outer edge of the bed 8. The part of the bed 8 extending radially outwards from this valve seat 14 is sealed so as to be impervious to air and the region of contact between the diaphragm 9 and the bed 8 serves to provide a valve which controls the intake of air from the port 10 to the main part of the bed 8. In the centre of the bed 8 there is a cylindrical exhaust outlet 15 which, when the diaphragm is in its equilibrium position, is sealed by a conical valve member 16. The valve member 16 rides on a spindle 17 fixed to the centre of the diaphragm 9.

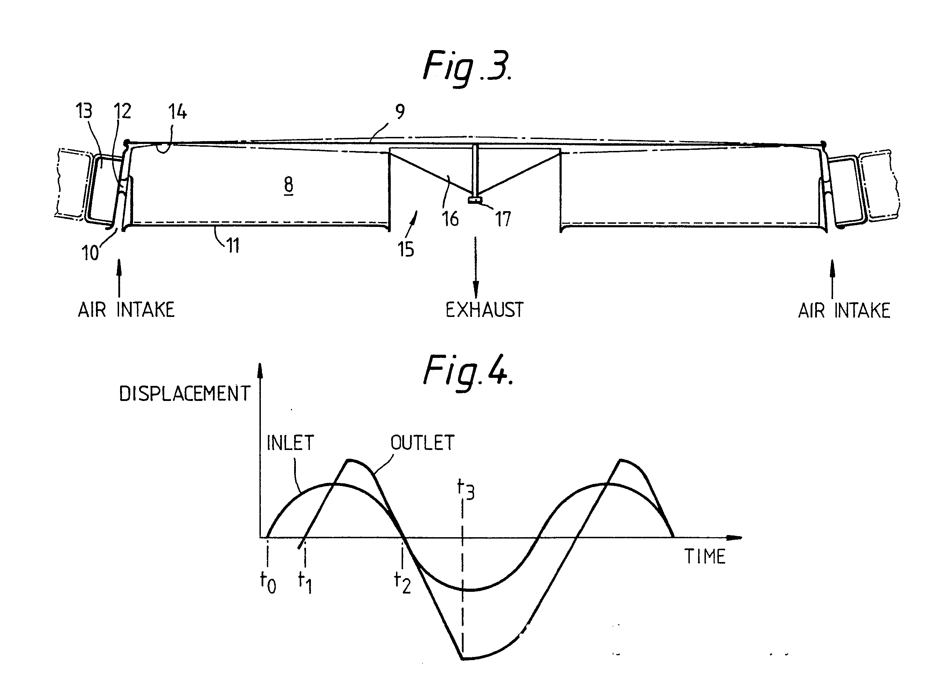

The operational cycle of the pressure-swing gas separator is now described with reference to Figure 4 which shows the displacement of the inlet valve and the outlet valve with respect to time. At time $t_0$ the diaphragm 9 is in its equilibrium position. Subsequently as the pressure in the gas in the chamber immediately adjacent the diaphragm drops, the diaphragm is drawn back in the radially inwards direction away from the bed 8. The diaphragm 9 immediately clears the seat 14 thereby opening the inlet valve. However the exhaust valve remains closed since there is free movement between the spindle 17 and the valve member 16 so that although the spindle 17 is drawn up the valve member 16 remains seated. As a result during the period $t_0$ to $t_1$ a partial vacuum is created under the diaphragm 9 which draws in and accelerates air from the inlet 10 over the seat 14. At time $t_1$ as the diaphragm 9 moves further upwards the end of the spindle 17 engages the valve member 16, unseating it and so opening the exhaust valve. The air drawn under the diaphragm 9 from the inlet 10 is therefore drawn across the bed 8 and its momentum encourages it to continue to move radially in to the centre of the bed 8. As it does so it scavenges the depleted air initially present between the bed 8 and the diaphragm 9 and drives it out through the exhaust outlet 15.

Having reached its point of maximum displacement the diaphragm 9 then moves downwards towards the bed 8 again. At time $t_2$ the diaphragm 9 again reaches its equilibrium position and closes the inlet and exhaust valves. It should be noted that although there is a delay between the opening of the inlet and outlet valve resulting from the play on the spindle 17 when they close at time $t_2$ they do so simultaneously. During the subsequent phase of the cycle the pressure under the diaphragm 9 increases driving the fresh air drawn through the annular inlet 10 into the zeolite bed 8. As the air moves forwards through the bed 8 the zeolite acts as a molecular sieve, preferentially adsorbing the nitrogen from the air so that the gas passing out through the bottom of the bed 8 is oxygen enriched/nitrogen depleted. Then from time $t_3$ which is point of maximum displacement in the opposite direction towarsd the bed 8, the diaphragm 9 moves back towards its equilibrium position reducing the pressure above the bed 8. Under this reduced pressure nitrogen is desorbed from the bed 8 and drawn back towards the surface. As the diaphragm 9 reaches its equilibrum point the cycle is repeated with the next intake of air driving the oxygen depleted, nitrogen-rich gas from the surface of the bed 8 to the exhaust outlet 15. The cycle accelerates the gas throughout its passage across the face of the bed so that when it reaches the outlet 15 its momentum carries it away from the chamber 1 as a puff of gas which does not mix with the intake to the bed. During successive cycles the oxygen is driven down through the bed to its outer surface where it is conducted away in the manner already described.

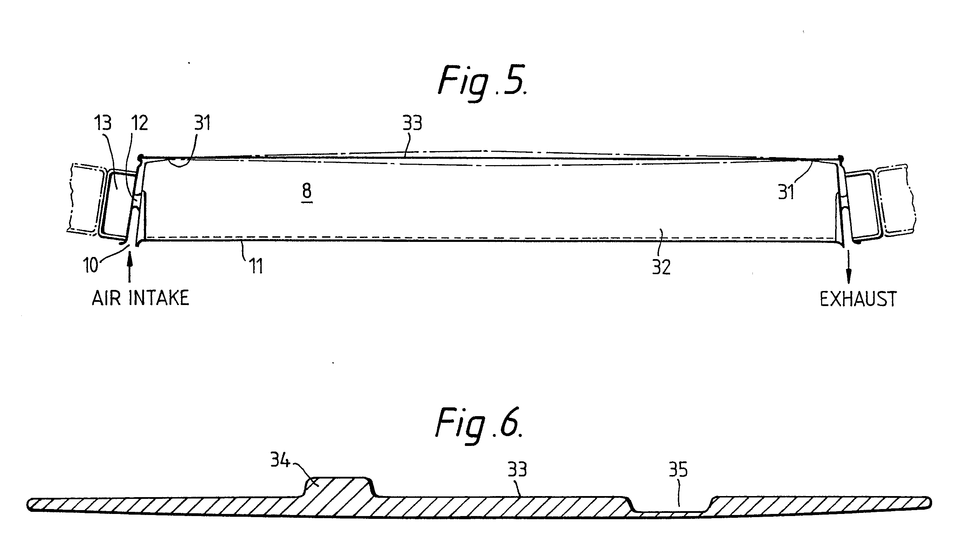

A modification of the gas separator module is shown in Figures 5, 6 and 7. In this example an annular valve seat 31 surrounds a dished bed of adsorbent material 32. A thick tuned diaphragm 33 resonates at the resonance frequency of the substantially spherical chamber 1 (not shown in Figure 5). The bed 32 and annular valve seat are generally similar to the bed 8 and seat 14 of the first example. The diaphragm 33 is unbalanced and includes an added mass 34 on one side and a cut-away portion 35, shown in Figure 6, on its other side. This assymetry in the diaphragm 33 leads to a harmonic oscillation being generated in the diaphragm 33 as it is oscillated backwards and forwards in the radial direction at the fundamental frequency by the spherical wavefronts propagating in the chamber 1. This harmonic oscillation has the form of a transverse wave moving from left to right as shown in Figure 5.

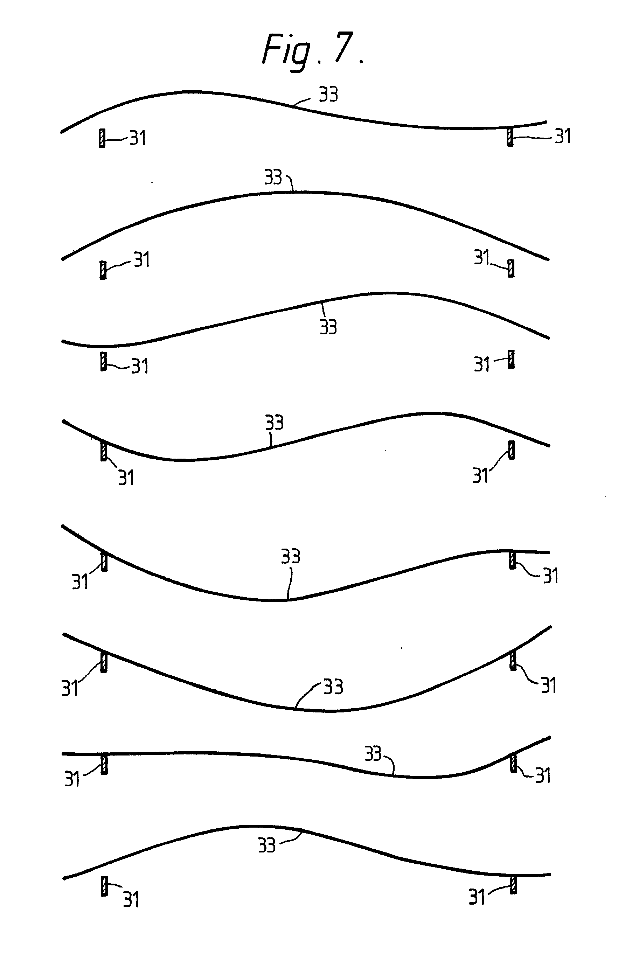

Figure 7 illustrates this effect diagrammatically. In Figure 7 the diaphragm is represented by a line with the amplitude of the transverse oscillation greatly exaggerated to illustrate how, as the diaphragm 33 is moving away from the bed 32, first the left hand side, as shown in Figures 5, 6 and 7 lifts away from the annular seat 31 so allowing fresh air to be drawn in to the gap formed between the diaphragm 33 and the valve seat 31 at the left hand side of the gas separator module. Further movement of the diaphragm 33 away from the adsorbent bed 32 further reduces the pressure above the adsorbent bed 32, draws in more fresh air from the left hand side of the bed 32 and draws out more of the depleted nitrogen rich gas from the bed 32. As the fresh air moves inwards into the space between the bed 32 and diaphragm 33 it has a significant velocity in a direction from left to right as shown in Figures 5 and 6. After reaching its maximum deflection the diaphragm 33 starts to return towards the dished bed 32. Again the left hand side of the diaphragm moves first, as shown most clearly in Figure 7 and this leads to the left hand side of the diaphragm 33 forming a seal with the annular seat 31 at the left hand side of the diaphragm whilst the right hand side of the diaphragm is still out of contact with the right hand side of the annular seat 31, again as shown in Figure 7. The transverse movement of air across the face of the dished bed 32 leads to an effective scavenge of the depleted, nitrogen rich air from the surface of the bed 32 and out of the right hand side of the gas separator module between the right hand side of the annular seat 31 and the diaphragm 33. As the diaphragm 33 continues to move towards the adsorbent bed it eventually seats against the entire circumference of the annular seal 31 so closing the valve and pressurising the fresh air introduced into the module and forcing it into the adsorbent bed 32. After reaching a point of maximum deflection towards the bed 32 the diaphragm again starts to return and move away from the bed 32. Again it is the left hand side of the diaphragm which first lifts from its annular seat 31 to allow fresh air to enter the module from the left hand side and the process is repeated. The transverse wave action that is induced in the diaphragm 33 also encourages the movement of air in the transverse direction from the left hand side to the right hand side of the gas separator module.

A pressure-swing gas separator such as that described above offers both greater efficiency and lower capital costs by comparison with a conventional oxygen production plant such as a cryogenic oxygen recovery unit. A 2 metre radius sphere having its surface entirely covered by gas-separation modules is capable of producing 100 tonnes per day of 98% oxygen with an oxygen recovery ratio, that is the ratio by volume of oxygen input to oxygen output, of 100:15 and a specific energy consumption, that is the mechanical energy input required to produce 1 kilogram of oxygen, of 0.125 kW hr/kg. The 98% oxygen mixture produced is suitable for use in industrial processes such as iron and steel-making but may also be used for other purposes such as sewage-treatment or the generation of oxgyen for medical use. For these alternative uses the scale of the device and the concentration of the oxygen produced may be varied to suit the needs of the particular application. Where only low volumes of oxygen are required a gas-separator unit formed by a single circular bed and diaphragm such as that described above may be used in an ogival gas resonance device such as that described in the European application cited above.

In an example embodiment of the present invention the thermally driven gas-resonance device is used to power a combined heat and power (CHP) plant. Whereas in the first example discussed above the greater part of the icosahedral shell 3 was formed from gas-separator units in this second example only one or two such gas-separator modules 6 are used. The output from these few gas-separator modules is used to enrich the gas mixture fed to the combustion unit 2. This has the effect of sharpening the thermal pulse and reducing the production of undesirable by-products such as NOX.

In the combined heat and power unit the pressure swings generated within the spherical chamber of the resonance device can be used to drive a heat pump. A regenerator 20 is formed as an equatorial belt extending around the inside of the chamber 1 close to but spaced from the inner walls of the icosahedral shell 3. The regenerator 20 is formed from a honeycomb of low thermal conductivity in the radially outwards direction. The honeycomb material may be formed from aluminium foil. The effective thermal conductivity of such a honeycomb is low because the thickness of the foil is very much less than the radial extent of the regenerator: in a 2 m sphere the regenerator typically has a radial extent of 5 cm while the foil is only 0.2 mm or less thick.

The gas in the region of the regenerator 20 goes through repeated compression and expansion cycles driven by the pressure swings within the chamber 1. As the gas expands and contracts it takes up heat from the regenerator and subsequently gives back heat. The physical distance moved by the gas in the vicinity of the regenerator 20 is relatively small by comparison with the dimensions of the regenerator 20 so that regions of gas towards the centre of the regenerator generally stay in thermal contact with the regenerator throughout the compression and expansion phases of the cycle. The process for these regions is therefore symmetrical and there is no net heat transfer to or from the regenerator 20. At the inner and outer faces of the regenerator however the gas moves away from the generator during part of its cycle and so the symmetry of the process is broken, resulting in a net heat flow. It can be shown by a simple analysis discussed in detail in the above European specification that the direction of the heat flow is such that the radially inner surface of the regenerator 20 is cooled and the outer surface is heated.

If the heat pumping described above is to be put to use then some means is required to sink or source heat from the regenerator for the purposes of cooling or heating as appropriate. As noted above a water spray is directed into the chamber 1 to enhance the operation of the gas resonance device and this spray may conveniently be used as the medium for heat transfer at the regenerator 20. That part of the spray which reaches the regenerator 20 collects on the internal surfaces of the regenerator and is progressively swept by the gas flow within the regenerator to its radially inner and outer faces in roughly equal proportions. The water at the inner face acts as a heat source and is cooled while conversely the water at the outer face acts as a heat sink and is warmed. Channels are provided at the base of the regenerator to collect separately the water drained from the inner and outer surfaces and this water may then be pumped away and circulated, enabling the CHP to provide winter heating or summer cooling.

In addition to providing heating and/or cooling the CHP provides electrical power in the form of single-phase alternating current. Power generating modules are fitted into generally triangular elements 4 of icosahedral frame of the chamber 1 in the same manner as the air-separator modules described above. As with the air-separator modules the power generating modules use circular diaphragms with the same resonant frequency as the chamber 1 driven by the pressure swings within the chamber 1. Where necessary a single module may combine the functions of power generation and air separation. If, alternatively, a dedicated power-generation module is used then the circular diaphragm is mounted above a simple cavity rather than a zeolite bed. The current is generated in a cylindrical conducting coil 21 mounted centrally on the diaphragm 9 with its longitudinal axis normal to the surface of the diaphragm 9. A permanent magnet 22 is mounted adjacent the coil but clear of the diaphragm. The movement of the coil in the magnetic field generates current at the frequency of the oscillation of the diaphragm, that is at 200 Hz in the present example. The efficiency of the thermally-driven gas resonance device is such that an electrical generator of the type described can match the efficiency of conventional devices such as diesel-electric generators and is likely to have considerably lower maintenance costs.

Although two specific examples are discussed above the scope of the present invention is not of course in any way limited to the particular functional modules described. The modular nature of the gas resonance device is such that it may readily be adapted for different purposes by incorporating suitable designed modules. In practice such a thermally-driven gas resonance device may advantageously be used for any of the many applications in which a high efficiency thermally driven engine is required.

## Claims

1. A gas resonance device (101) comprising a pulsed combustor (102) located in the middle of a substantially spherical resonance chamber (103).

2. A gas resonance device according to claim 1, in which the resonance chamber is formed as an icosahedron (103) with triangular segments (104) having rounded edges.

3. A thermally driven gas resonance device (1, 101) according to claim 1 or 2, in combination with a pressure swing gas separator (16, 108), the oscillating gas in the gas resonance device (1, 101) being used to provide the pressure changes required to drive the pressure swing gas separator (16, 108).

4. A gas resonance device according to claim 3 when dependent upon claim 2, in which the gas separator comprises a number of beds of adsorbent material (16, 107) each having a generally circular configuration and being located in the side wall of the resonance chamber (3, 103) with three beds (107) contained wholly within each substantially triangular segment (104) of the icosahedron and other beds (107) centred on points of the icosahedron.

5. A thermally driven gas resonance device (1, 101) according to claim 1 or 2, in combination with a heat pump (19, 120), the oscillating gas in the thermally driven gas resonance device (1, 101) being used to provide the power to operate the heat pump (19, 120).

6. A gas resonance device according to claim 5, including a regenerator (120) located adjacent, but spaced from, the periphery of the substantially spherical resonance chamber (103) and a heat sink located on the side of the regenerator (120) adjacent the outer periphery of the substantially spherical resonance chamber (103) and remote from the pulsed combustor (102).

7. A gas resonance device according to claim 6, in which a source of low grade heat is introduced into the resonance chamber (103) on the side of the regenerator (120) towards the pulsed combustor (102) and in which the source of low grade heat is formed by a number of water jets (105) arranged to provide a water spray into the inside of the resonance chamber (103).

8. A pressure swing gas separator comprising a thermally driven gas resonance device (1, 101) including a pulsed combustor (2, 102) and a resonance chamber (3, 103), a diaphragm (109, 133) bounding part of the resonance chamber (3, 103) and a bed of adsorbent material (16, 108) adjacent the diaphragm (109, 133) and on the side of the diaphragm (109, 133) remote from the pulsed combustor (2, 102).

9. A pressure swing gas separator according to claim 8, in which the diameter, thickness and stiffness of the diaphragm (109, 133) are selected so that the diaphragm (109, 133) has a natural resonant frequency corresponding to that of the resonance chamber (3, 103).

10. A thermally driven gas resonance device comprising a resonance chamber (3, 103) containing a pulsed combustor (2, 102), a flexible diaphragm (109, 133) bounding part of the resonance chamber (3, 103) and an electrical transducer (121, 122) which is coupled to the diaphragm (109, 133) and which generates electrical power upon the diaphragm (109, 133) oscillating as a result of the gas resonance inside the resonance chamber (3, 103).

11. A gas resonance device according to claim 10, forming part of a device in accordance with claims 1, 2, 5, 6 or 7 to provide a combined heat and power installation.

12. A gas resonance device according to claim 11, which also includes a bed (108) of adsorbent material which preferentially adsorbs oxygen or nitrogen bounding at least part of the resonance chamber (103) so that mechanical oscillations resulting from gas resonance within the chamber (103) provides power for the pressure swing gas separator, the pressure swing gas separator performing a pressure swing gas separation on air to produce a gas phase which is rich in oxygen, a portion of the gas phase rich in oxygen being mixed with an inflammable gas or vapour and being fed to the pulsed combustor (2, 102), the oxygen enrichment accelerating the combustion and so sharpening the intensity of the combustion pulses and, thereby, enhancing the mechanical resonances induced within the chamber (103).

*Fig.1.*

5

1

3

2

*Fig.2.*

4

4'

7

6

Fig.3.

13 12 14 9

8

10 11 15 16 17

AIR INTAKE                    EXHAUST                    AIR INTAKE

Fig.4.

DISPLACEMENT

INLET    OUTLET

$t_3$

$t_0$  $t_1$      $t_2$                    TIME

EP 0 368 650 A1

*Fig.5.*

AIR INTAKE

EXHAUST

*Fig.6.*

## Fig.7.

Fig. 8.

COLD O/P

HOT O/P

Fig. 9.

EP 0 368 650 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-2839046 (KAMM) <br> * column 1, line 65 - column 2, line 47; figure 1 * <br> --- | 1, 2 | F02G3/00 <br> F25B9/00 <br> F23C11/04 <br> B01D53/04 |
| A,D | EP-A-267727 (WELLS) <br> * abstract * <br> * page 5, line 12 - page 6, line 7; figure 1 * <br> --- | 1, 3-6, 10, 12 | |
| A | US-A-4767314 (MUTCHLER) <br> * abstract * <br> * column 2, lines 52 - 64; figure 1 * <br> --- | 8 | |
| A | US-A-4685510 (PRIEM) <br> --- | | |
| A | EP-A-95227 (THERMA-WAVE) <br> ----- | | |

TECHNICAL FIELDS
SEARCHED (Int. Cl.5)

F02G
F25B
F23C
B01D

**The present search report has been drawn up for all claims**

| Place of search | Date of completion of the search | Examiner |
|---|---|---|
| THE HAGUE | 19 DECEMBER 1989 | ERNST J.L. |

EPO FORM 1503 03.82 (P0401)